# EUROPÄISCHE PATENTSCHRIFT

(11) **EP 1 077 128 B1**
(45) Veröffentlichungstag und Bekanntmachung des Hinweises auf die Patenterteilung: **29.10.2003**
(21) Anmeldenummer: 00116988.7
(22) Anmeldetag: 08.08.2000
(51) Int. Cl.: B32B 13/08, E04F 15/024

(54) **Gipskartonträgerplatte und daraus erhältliches Hohlraumbodensystem**
Gypsum plaster carrier boards and false floor system obtainable therefrom
Panneaux de support en plâtre cartonné et système de faux plancher à partir de ceux-ci

(30) Priorität: 19.08.1999 DE 19938819
(43) Veröffentlichungstag der Anmeldung: 21.02.2001
(73) Patentinhaber: Rigips GmbH, D-40549 Düsseldorf (DE)
(72) Erfinder: Giffinger, Peter, 2801 Katzeldorf (AT); Lackner, Andrea, 8990 Bad Aussee (AT); Leitgeb, Alfred, 8990 Bad Aussee (AT)
(74) Vertreter: Cohausz & Florack

(56) Entgegenhaltungen:
- DE-A- 2 611 372
- US-A- 3 859 766
- US-A- 4 181 767
- US-A- 5 945 198
- DATABASE WPI Section Ch, Week 198331 Derwent Publications Ltd., London, GB; Class A82, AN 1983-726192 XP002179082 & JP 58 107328 A (DYNIC CORP), 27. Juni 1983 (1983-06-27)

## Beschreibung

Die Erfindung betrifft eine Trägerplatte und deren Verwendung zur Errichtung eines Hohlraumbodensystems.

Zur Herstellung von Hohlraumböden werden Plattenelemente mit Stützfüßen an den Ecken auf Rohfußböden angeordnet und anschließend ein Fließestrich auf dem Plattenelementboden ausgebracht.

Zur Begehung des Hohlraumbodens aus Plattenelementen und dem Aufbringen eines Naßestrichs ist es erforderlich, daß die Plattenelemente über eine ausreichende Festigkeit verfügen. Diese Festigkeit wird durch Gipskartonplatten nicht ohne weiteres erreicht. Andererseits sind Gipskartonplatten aufgrund ihres geringen Gewichts leicht verarbeitbar.

Die DE 26 11 372 A1 beschreibt ein Verfahren zur Herstellung eines Hohlraumbodensystems unter Verwendung einer üblichen Gipskartonplatte. Diese Gipskartonplatten verfügen über Festigkeiten quer/längs der Kartonlage von etwa 1:3. Dieser bekannte Doppelboden wird erhalten, indem Gipskartonplatten auf Tragelementen aufgebracht und auf den Gipskartonplatten eine fließfähige Estrichmasse ausgegossen wird, die unter Ausbildung einer horizontalen Fläche auf der Schalung auseinander fließt und erstarrt. Auf der Oberseite der Schalungsplatten kann eine hydrophobe Kraft-Papierlage angeordnet sein. Die Tragelemente für die Schalung sind vorzugsweise stegförmig in Form von aus Aluminium bestehenden Hohlprofilschienen ausgebildet. Die GM 77 15 421 offenbart eine Gipskartonplatte, deren Vorder- und Rückseite mit einem mehrlagigen Karton, insbesondere zweilagig, beschichtet ist.

Es ist bekannt, zur-Herstellung von Fußböden aus Plattenelementen mit Glasfaservliesen armierte Gipsbauplatten oder gipsgebundene Spanplatten einzusetzen. Derart hergestellte Platten sind jedoch vergleichsweise teuer. Ferner werden Holzspanplatten oder zementgebundene Spanplatten eingesetzt. Nachteilig an diesen Platten ist das Brandverhalten, da diese Platten in den Brandstoffklassen B1 oder B2 nach DIN 4102 klassifiziert sind. Darüber hinaus besteht bei diesen Platten die Gefahr der Feuchteaufnahme aus feuchten Rohbetondecken, was zu einer Verringerung der Tragfähigkeit während des Estricheinbaus führen kann.

Der Erfindung lag deshalb die Aufgabe zugrunde, zur Herstellung von Hohlraumbodensystemen einen feuchteresistenten, Baustoffklasse A2 entsprechenden und preiswerten Ersatz für mit Glasfaservlies armierte Gipsbauplatten bereitzustellen, der dennoch über die erforderliche Festigkeit verfügt, so daß ein Stützfußabstand bis zu 60 x 60 cm erreicht werden kann.

Gelöst wird diese Aufgabe durch eine Trägerplatte in Form einer beidseitig mit Kartonlagen bedeckten Gipsbauplatte (Gipskartonplatte) für Hohlraumbodensysteme, deren Kartonlagen mindestens drei Schichten enthalten, mindestens eine Kartonlage eine Festigkeit quer/längs von 1 : < 2,5, vorzugsweise etwa 1 : 2, besitzt und mindestens einer auf der Gipsbauplatte angeordneten Barriereschicht oder weiteren Kartonlage.

Durch die Verringerung des Verhältnisses der Kartonfestigkeiten quer/längs werden erfindungsgemäß bei einer 18 mm dicken Gipskartonplatte Biegezugfestigkeiten von etwa > 7 N/mm² in Querrichtung und von etwa > 4,0 N/mm² in Längsrichtung erzielt, wogegen eine 18 mm Standardgipskartonplatte Festigkeiten von > 5 N/mm² und von > 1,5 N/mm² aufweist. Die derzeit häufig verwendete Holzspanplatte bietet Biegezugfestigkeiten von etwa 9 N/mm² in Querrichtung und 7 N/mm² in Längsrichtung.

Die erfindungsgemäß erhaltenen Trägerplatten können zu Bodensystemen auf noch nicht vollständig ausgetrockneten Betondecken errichtet werden, wobei die Feuchteaufnahme der Trägerplatte aus der feuchten Umgebung durch eine Barriereschicht oder Dampfsperre reduziert ist. Es war nicht zu erwarten, daß durch die Kombination einer speziellen Gipskarton, platte und einer zusätzlichen, auf der Gipskartonplatte angeordneten Barriereschicht Bruchfestigkeitswerte gemäß DIN 18180 in Längsrichtung von mehr als 500 N, üblicherweise mehr als 700 N, erreicht werden können.

Gegenüber dem Hohlraumboden der DE 40 21 963 A1 weist das erfindungsgemäße Hohlraumbodensystem den Vorteil auf, daß ein mehrschichtiger Aufbau aus zwei Trägerplatten nicht erforderlich ist.

Die zur Herstellung der Gipskartonplatten mit verbesserter Festigkeit erforderlichen Kartonlagen zeichnen sich dadurch aus, daß die Faserausrichtung des Kartons derart verändert wurde, daß eine erhöhte Querzugfestigkeit erreicht wurde.

Mindestens drei Papierschichten werden zum Erhalt einer erfindungsgemäß einzusetzenden Gipskartonplatte aufeinander aufgetragen. Vorzugsweise wird ein Karton aus einem Verbund von 5 bis 7 Lagen verwendet. Das Flächengewicht des Laminats oder der endgültigen Kartonlage beträgt etwa 250 bis 450 g/m², vorzugsweise 300 bis 400 g/m².

Zur Herstellung der als Trägerplatten eingesetzten Gipskartonplatten wird in bekannter Weise Stuckgips mit Wasser und den üblichen Zusätzen über Dosiereinrichtungen kontinuierlich in einem Durchlaufmischer zu einem fließfähigen, homogenen, schnell versteifenden Brei angemacht. Dieser Brei wird auf einer fortlaufenden erfindungsgemäß zu verwendenden Kartonbahn aufgetragen, mit einer zweiten Kartonbahn zugedeckt und über eine Formstation zu einem voll ummantelten Band geformt. Das zunächst weiche Gipskartonband wird nach kurzer Zeit hart und dann in einzelne Plattenstücke mit den gewünschten Maßen zerschnitten. Diese Platten werden sofort in einem Etagentrockner getrocknet.

Um die geforderte Belastbarkeit von mehr als 170 kg und Feuchteresistenz zu erreichen, wird die Plattenunterseite mit einer Dampfsperre oder Barriereschicht laminiert. Dies ist vorzugsweise ein mit Polyolefin, insbesondere mit Polyethylen oder mit LDPE (Low Density Polyethylen), beschichtetes Papier, oder eine Metallfolie. Das Papier hat vorzugsweise ein Flächengewicht von etwa 80 bis 120 g/m². Die Beschichtung durch die zuvor genannten Polyolefine kann vorzugsweise bei einen Flächengewicht 70 bis 110 g/mm² erfolgen. Gemäß einer weiteren bevorzugten Ausführungsform der Erfindung kann die Dampfsperre ein mit einer Metallfolie beschichtetes Papier sein.

Gemäß der nebengeordneten Ausführungsform der Erfindung wird zum weiteren Ausgleich der Festigkeiten quer/längs oder zur Festigkeitserhöhung allgemein eine zusätzliche Kartonlage des erfindungsgemäß zu verwendenden Kartons aufkaschiert, wobei vorzugsweise die Längsrichtung des Kartons in Querrichtung der Platte aufkaschiert wird.

Die Dampfsperre und die gegebenenfalls zu verwendende weitere Kartonlage können auf die Gipskartonplatte aufgeleimt werden.

Die erfindungsgemäßen Trägerplatten werden beispielsweise auf höhenverstellbare Stützfüße in einem Raster von 60 x 60 cm verlegt. Die Fugen zwischen den Platten können abgeklebt werden, vorzugsweise wird der Boden jedoch mit einer Schrenzpapier oder einer Folie oder anders gearteten Trennlage abgedeckt. Auf dieses Hohlraumbodensystem wird dann beispielsweise ein Calciumsulfat-Fließestrich einer Festigkeitsklasse von 20 N/mm² oder 30 N/mm² aufgebracht.

Die nachfolgende Tabelle stellt die Biegezugfestigkeiten quer/längs verschiedener Platten dar. Der Terminus Spezialkarton in der Tabelle bezeichnet die erfindungsgemäß eingesetzte Kartonlage mit einem Verhältnis der Festigkeiten quer/längs von etwa 1 : 2. Unter Barriereschicht wird ein Papier mit einem Flächengewicht von 90 g/m² verstanden, das mit 90 g/m² LDPE beschichtet ist. Das mit Metallfolie beschichtete Papier ist ein Papier eines Flächengewichts von 90 g/m²; die Metallbeschichtung ist eine Beschichtung mit Aluminium in einer Dicke von 0,08 mm.

| Biegezugfestigkeit [N/mm²] | quer | längs |
|---|---|---|
| Gipskartonplatte 18 mm | 5,7 | 1,9 |
| Gipskartonplatte 18 mm + Spezialkarton (= Spezialplatte) | 7,5 | 4,1 |
| Spezialplatte + Barriereschicht | 8,6 | 4,5 |
| Spezialplatte + metallfoliebeschichtetes Papier | 7,8 | 4,5 |
| Spezialplatte + zusätzliche Spezialkartonlage | 13,8 | 7,3 |

Vergleicht man die Belastbarkeit durch Begehen auf einem 600 x 600 mm Raster, so zeigt eine Standardgipskartonplatte eine Tragfähigkeit von weniger als 100 kg, eine beschichtete Gipskartonplatte (in der Tabelle nicht genannt) etwa 130 kg und die erfindungsgemäße Trägerplatte etwa. 200 kg.

## Patentansprüche

1. Trägerplatte für Hohlraumbodensystem, **dadurch gekennzeichnet, daß** mindestens eine Kartonlage einer beidseitig mit Kartonlagen bedeckten Gipsbauplatte ein Verhältnis der Festigkeit quer/längs von 1 : < 2,5 aufweist, die Kartonlage aus mindestens drei Schichten aufgebaut ist und auf einer Seite der Gipsbauplatte eine Dampfsperre oder eine weitere Kartonlage angeordnet ist.

2. Trägerplatte nach Anspruch 1, **dadurch gekennzeichnet, daß** das Verhältnis der Festigkeit der Kartonlage quer/längs etwa 1 : 2 beträgt.

3. Trägerplatte nach Anspruch 1 oder 2, **dadurch gekennzeichnet, daß** die Dampfsperre ausgewählt ist aus einem mit Polyolefin, insbesondere mit Polyethylen oder mit LDPE (Low.Density Polyethylen) beschichteten Papier oder einer Metallfolie.

4. Trägerplatte nach Anspruch 3, **dadurch gekennzeichnet, daß** die Dampfsperre ein mit einer Metallfolie beschichtetes Papier ist.

5. Trägerplatte nach einem der vorangegangenen Ansprüche, **dadurch gekennzeichnet, daß** zum Ausgleich des Verhältnisses der Festigkeiten quer/längs eine weitere Kartonlage aufkaschiert ist.

6. Hohlraumbodensystem, enthaltend eine Trägerplatte nach einem der Ansprüche 1 bis 5.

## Claims

1. A carrier board for false floor systems, **characterised in that** at least one board layer of a gypsum building board covered with board layers on both sides has a transverse/longitudinal strength ratio of 1 : < 2.5, the board layer is constructed of at least three layers and on one side of the gypsum building board there is arranged a vapour barrier or a further board layer.

2. The carrier board according to claim 1, **characterised in that** the transverse/longitudinal strength ratio of the board layer is approximately 1 : 2.

3. The carrier board according to claim 1 or claim 2, **characterised in that** the vapour barrier is selected from a paper coated with a polyolefin, especially with polyethylene or with LDPE (Low Density Polyethylene) or a metal foil.

4. The carrier board according to claim 3, **characterised in that** the vapour barrier is a paper coated with a metal foil.

5. The carrier board according to any one of the preceding claims, **characterised in that** a further board layer is laminated on to equalise the transverse/longitudinal strength ratio.

6. The false floor system containing a carrier board according to any one of claims 1 to 5.

## Revendications

1. Panneau de support pour un système de faux plancher, **caractérisé en ce qu'**au moins une couche de carton d'une plaque de parement en plâtre couverte des deux côtés de couches de carton dispose d'un rapport de résistances transversale/longitudinale 1:<2,5, la couche de carton est composée d'au moins trois couches et un côté de la plaque de parement en plâtre est pourvue d'une barrière de vapeur ou d'une autre couche de carton.

2. Panneau de support selon la revendication 1, **caractérisé en ce que** le rapport de la résistance transversale/longitudinale de la couche de carton est d'environ 1:2.

3. Panneau de support selon la revendication 1 ou 2, **caractérisé en ce que** la barrière de vapeur consiste en un papier ou une feuille métallique recouvert de polyoléfine en particulier de polyéthylène ou de LDPE (polyéthylène basse densité).

4. Panneau de support selon la revendication 3, **caractérisé en ce que** la barrière de vapeur consiste en un papier recouvert d'une feuille métallique.

5. Panneau de support selon l'une quelconque des revendications précédentes, caractérisé en qu'une autre couche de carton est stratifiée afin de compenser le rapport des résistances transversales/longitudinales.

6. Système de faux plancher, disposant d'un panneau de support selon une des revendications de 1 à 5.
